# EUROPÄISCHE PATENTANMELDUNG

(11) **EP 1 103 813 A1**
(43) Veröffentlichungstag der Anmeldung: **30.05.2001**
(21) Anmeldenummer: 99123655.5
(22) Anmeldetag: 29.11.1999
(51) Int. Cl.: G01N 30/58, G01N 30/74

(54) **Annularchromatograph mit Fraktionsdetektor**

(71) Anmelder: Prior Separation Technology Gmbh, 6840 Götzis (AT)
(72) Erfinder: Prior, Dipl.-Ing. Dr. Adalbert, 6841 Götzis (AT); Wolfgang, Dipl.-Ing. Dr. Jürgen, 6912 Hörbranz (AT); Lehmann, Dipl.-Phys. Hartmut, 07747 Jena (DE); Prior, Joachim, 8010 Graz (AT)
(74) Vertreter: Büchel, Kurt F., Dr.

(57) **Zusammenfassung**

Die Erfindung bezieht sich auf eine Vorrichtung und ein Verfahren zur Detektion des Austritts von Flüssigkeit aus einem Teilchenbett (1) oder einer Bodenplatte (2) eines kontinuierlich arbeitenden Annularchromatographen (20) und/oder zur Bestimmung von Eigenschaften der austretenden Flüssigkeit, insbesondere eines Eluats, wobei von einer - vorzugsweise externen - Lichtquelle (S) über Lichtleiterkabeln (11) eine Lichtübertragung, insbesondere in Form eines Lichtkegels (13, 13') zu den Sensoren (10) hin und von den Sensoren (10) weg eine Signal- bzw. Datenübertragung, insbesondere ausgehend von einem Lichtkegels (14), über Lichtleiterkabeln (11') hin zu einem abbildenden Photodetektor (D) erfolgt.

## Beschreibung

Die vorliegende Erfindung betrifft einen Annularchromatographen, der mit einem System ausgestattet ist, welches den Austritt von Eluat aus dem Teilchenbett bzw. aus der Bodenplatte des Annularchromatographen und/oder Eigenschaften des austretenden Eluats anzeigen kann.

Die Detektion des Austritts von in chromatographischen Säulen aufgetrennten Komponenten aus Chromatographen erfolgt im allgemeinen entweder intermittierend durch Ziehen und Analysieren von Proben oder kontinuierlich, z.B. mittels Durchflussdetektoren verschiedenster Art.

In der herkömmlichen Annularchromatographie, wo die Auslasskanäle des Annularchromatographen mit der Säule verbunden sind und um deren Achse rotieren, sind kontinuierliche Messungen allerdings nicht möglich.

Zum Erhalt kontinuierlicher Daten über Zeitpunkt und Menge des Austritts von aufgetrennten Komponenten an den einzelnen Auslässen, was z.B. Rückschlüsse auf die räumliche Verteilung der getrennten Komponenten, die Homogenität der Säule, etc. ermöglicht, wäre daher ein kontinuierliches Detektionssystem wünschenswert.

In WO99/12625, deren Inhalt hier ausdrücklich miteingeschlossen sein soll, wird ein Annularchromatograph mit kreisringförmigem Teilchenbett, einem Aufgabekopf zum Auftragen des flüssigen Beschickungsmaterials und mit Auslässen zum Auffangen des Eluats beschrieben, bei dem die Auslässe in Form von mit Flüssigkeitsauslässen versehenen Kammern eines Auffangringes ausgebildet sind, auf dem die Grundplatte des Teilchenbetts abdichtend gleitend geführt wird. Das bedeutet, dass sich das Teilchenbett nicht nur relativ zum Aufgabekopf sondern auch zu den Auslässen des Auffangringes bewegt.

Mit einer derartigen Verbindung von Auslässen und Teilchenbett ist es dem gegenständlichen Erfinder nunmehr gelungen, ein kontinuierliches Detektionssystem bereitzustellen, welches nicht nur Informationen über den Austritt und die Beschaffenheit der durch die Annularchromatographie getrennten Komponenten des Probenmaterials liefert, sondern insbesondere dazu geeignet ist, das oder die Herstellungs- oder Bearbeitungsverfahren, durch welche das Probenmaterial bzw. das mittels der kontinuierlichen Annularchromatographie aufzutrennende Feed-Material produziert oder vor der Trennung bearbeitet wird, kontinuierlich über geeignete Rückkopplungs-Mechanismen, insbesondere durch Anbindung an einen Prozessrechner oder eine Prozesssteuerungseinheit, zu steuern.

Unter dem erfindungsgemäss bevorzugten Annularchromatographen ist ein solcher zu verstehen, welcher neben einem feststehenden Aufgabekopf für Feed und Eluens ausserdem ein zwischen zwei konzentrischen Zylindern und einer Bodenplatte angeordnetes Teilchenbett enthält, das mittels einer Antriebswelle um seine Vertikalachse rotierbar ist und das an seinem unteren Ende Auslässe zum Auffangen des Eluats enthält. Dabei sind die Auslässe, wie in W099/12625 detailliert beschrieben, in Form eines feststehenden Auffangringes ausgebildet, der in mehrere, noch oben hin offene Kammern mit jeweils mindestens einer Auslassöffnung für aus dem Teilchenbett ankommende Flüssigkeit unterteilt ist, auf welchem eine das Teilchenbett nach unten hin und gleichzeitig die Kammern nach oben hin abschliessende, flüssigkeitsdurchlässige Grundplatte abdichtend und gleitend geführt wird.

Unter "Beschickungsmaterial" ist dabei jede durch den Aufgabekopf auf das Teilchenbett aufgetragene Flüssigkeit zu verstehen. Bei den Flüssigkeiten kann es sich dabei um das zu trennende Probenmaterial handeln, als auch um eine oder mehrere Elutionslösung, sowie gegebenenfalls weitere Flüssigkeiten wie z.B. Wasch-, Äquilibrier- oder Regenerierflüssigkeiten.

Unter "Teilchenbett" ist das im Ringspalt zwischen innerem und äusseren Zylindermantel befindliche, annular angeordnete Trennmedium in seiner Gesamtheit zu verstehen.

Unter "Trennmedium" ist dabei sowohl ein einziges als auch eine Kombination aus zwei oder mehreren gleichartigen oder völlig unterschiedlichen chromatographischen Trennmedien zu verstehen, vorzugsweise ausgewählt aus Materialien für die Adsorptionschromatographie, wie die der lonenaustauscher-, Gelpermeations- bzw. Molekularausschluss-, Affinitätschromatographie oder Chromatographie, die auf hydrophoben Wechselwirkungen beruht. Unter gleichartigen Trennmedien wäre z.B. eine Kombination aus zwei oder mehreren Anionenaustauschern unterschiedlicher Stärke zu verstehen, völlig unterschiedliche Trennmedien wären hingegen beispielsweise eine Kombination Anionenaustauscher plus Medium für hydrophobe Interaktionschromatographie oder Adsorptionsmaterial plus Material für Gelpermeationschromatographie. Zur Vermeidung unerwünschter Vermischung der Trennmedien können Sperrschichten zwischen den Trennmedien vorgesehen sein.
Der Begriff "Trennmedium" soll auch kompaktes Blockmaterial (Monolith) umfassen, welches eine für die Trennsäule geeignete Ringform aufweist. Dieses kann beispielsweise mit einer losen Schüttung eines Chromatographiematerials kombiniert werden. Die als Trennmedium geeigneten blockartig geformten Medien umfassen nicht nur anorganische oder organische Monolithen, die durch Blockpolymerisierung enthältlich sind (z.B. EP-A-0 320 023) sondern auch Trägermaterialien wie z.B. geformte Membranen oder Trägermaterialien mit Textilstruktur, insbesondere auf Basis von Zellulose. Derartige Monolithen bzw. blockartige Trägermaterialien können an ihrer Oberfläche zum Erhalt von eventuell benötigten Liganden modifiziert sein.

In einer bevorzugten Ausführungsform des erfindungsgemässen Annularchromatographen wird ein Auftragehilfsmittel zur gezielten, lokalen Aufbringung des Probenmaterials und gegebenenfalls zum Schutz des Trennmediums vor allfälliger mechanischer Belastung durch Teile des Aufgabekopfs eingesetzt. Dieses Auftragehilfsmittel kann z.B. eine Deckschicht sein, welche auf das Trennmedium aufgebracht wird und sich mit diesem nicht vermischt. Dazu eignen sich vor allem sphärische Partikeln wie etwa Glasperlen, die erforderlichenfalls - zwecks Verhinderung unerwünschter Wechselwirkungen mit dem Probenmaterial - oberflächenbehandelt, etwa durch Silanisieren hydrophobisiert, sein können. Es können aber auch geeignete Kunststoffpartikel aus z.B. Polymethacrylaten oder Polystyrol-Divinylbenzol verwendet werden, deren Oberfläche nicht hydrophobisiert werden muss. Die Partikelgrösse dieser Deckschicht-Partikel liegt vorzugsweise im Bereich von 20 bis 500µm.

Erfindungswesentlich ist nun, dass einerseits der oben erwähnte Auffangring feststehend angeordnet ist, sich also nicht dreht, und andererseits zum Anzeigen des Austritts von Eluat aus dem Teilchenbett und/oder zum Feststellen der Eigenschaften des Eluats Sensoren bzw. Detektoren in den Kammern oder Auslässen des Auffangringes angeordnet sind. Eine derartige Anordnung ermöglicht den kontinuierlichen Erhalt von Daten von jedem einzelnen Auslass bzw. aus jeder Kammer des Auffangringes des Chromatographen, wodurch eine ebenfalls kontinuierliche Überwachung des Trennsystems, aber gleichzeitig auch eine gezielte Prozesssteuerung für das Herstellungsverfahren jenes Materials, welches durch die Annularchromatographie getrennt werden soll, ermöglicht wird.

Bei den Sensoren bzw. Detektoren kann es sich um herkömmlicherweise auf den verschiedensten Gebieten eingesetzte Geräte handeln. So können z.B. aus den folgenden ausgewählt werden: optische Detektoren, vorzugsweise Fluoreszenzdetektoren, UV-Absorptions-Detektoren und Brechungsindexdifferenz-(RI)-Detektoren, indirekte optische Sensoren, Leitfähigkeitsdetektoren, dosimetrische Detektoren für radioaktive (ionisierende) Strahlung und Radiolumineszenz-Detektoren. Erfindungsgemäss bevorzugt sind faseroptische Sensoren, insbesondere faseroptische Reflexions- oder Transmissions-Fluoreszenz- oder UV-Absorptions-Detektoren, da diese hohe Messgenauigkeit bei einfacher Installation und rascher, fehlerfreier Datenübertragung gewährleisten.

Weiters werden als faseroptische Sensoren indirekte Sensoren, insbesondere faseroptische Mikrosensoren (Mikrooptoden) bevorzugt, welche auch die kontinuierliche Bestimmung von lösungsinhärenten Parametern, wie z.B. pH, pO₂, pCO₂ oder auch der Temperatur, ermöglichen, d.h. auch Konzentrationssensoren für im Eluat gelöste Stoffe und Temperaturfühler sein können. Bei Verwendung solcher faseroptischer Sensoren erfolgt die Lichtübertragung von einer vorzugsweise externen, d.h. ausserhalb des Detektionssystems bzw. ausserhalb der Kammern und Auslässe des Auffangringes angeordneten, Lichtquelle zu den Sensoren und die Signal- bzw. Datenübertragung von den Sensoren vorzugsweise jeweils über zu Lichtleiterbündeln zusammengefasste Glasfaserkabeln hin zu einem abbildenden Photodetektor, was wiederum die Genauigkeit der Messungen und die Reproduzierbarkeit der Daten erhöht.

Je nach Art des Detektors kann dabei die Lichtquelle vorzugsweise aus Xenon-Blitzlampen, Deuteriumlampen und Lasern und der abbildende Photodetektor aus das optische in Signal in elektrische Signale umwandelnden Diodenzellen, CCD-Chips oder Mikrokanalplatten ausgewählt werden, wobei allerdings ein Kompromiss zwischen den Kosten und der jeweils erforderlichen Leistungsfähigkeit, d.h. Lichtintensität bzw. Detektorempfindlichkeit, zu schliessen ist.

Der abbildende Photodetektor ist in besonders bevorzugten Ausführungsformen mit einem Computer zur Auswertung der Messdaten verbunden, wobei die von den Sensoren erhaltenen Daten im Computer mittels Software sequenziell abfragbar sein sollen, um zu jedem Zeitpunkt der chromatographischen Trennungen rasch aufeinanderfolgend und möglichst fehlerfrei Informationen über die Eluate in den einzelnen Kammern bzw. Auslässen zur Weiterbearbeitung erhalten zu können.

Die Glasfaserkabeln können ausserhalb oder innerhalb des Chromatographen zum abbildenden Photodetektor geführt werden, vorzugsweise aber innerhalb desselben, um den Raumbedarf dafür zu minimieren, die Kabel vor äusseren Einflüssen und besonders vor Beschädigung zu schützen und leichten Zugang zu den Auslässen/Kammern zu ermöglichen. Ausserdem sind die Glasfaserkabeln, insbesondere zum Leiten von UV-Licht, Quarzfaserkabeln mit einem bevorzugten Durchmesser von 200 um, was erneut einen Kompromiss zwischen Kosten und Performance, in diesem Fall der maximal hindurchleitbaren Lichtmenge, darstellt.

Die Erfindung wird nachstehend unter Bezugnahme auf die Zeichnungen detaillierter beschrieben, wobei
Fig. 1A eine schematische Darstellung eines bekannten Annularchromatographen und Fig. 1B eine vergrösserte schematische Ansicht der Eluatauslässe ist;
die Figuren 2A, 2B, 2C schematische Querschnittsansichten von faseroptischen Transmissions-Detektorsystemen im erfindungsgemässen Annularchromatographen sind;
Fig.3 eine schematische Queransicht des Sichtfelds eines Reflexions-Fluoreszenzdetektors ist;
Fig.4 eine schematische Darstellung der Bauweise des Sensorkopfs eines Reflexions-Fluoreszenzdetektors ist;
Fig.5 eine schematische Darstellung der Bauweise des Sensorkopfs eines Reflexions-UV-Absoprtionsdetektors ist;
Fig.6 eine schematische Darstellung der Bauweise des Sensorkopfs eines faseroptischen Mikrosensors ist;
Fig.7 eine schematische Darstellung der Kabel-/Sensor-Anordnung eines erfindungsgemässen Annularchromatographen ist;
Fig.8 eine schematische Darstellung der Datenübertragung mehrerer Sensorköpfe zur Detektoreinheit bei faseroptischen Sensoren ist; und

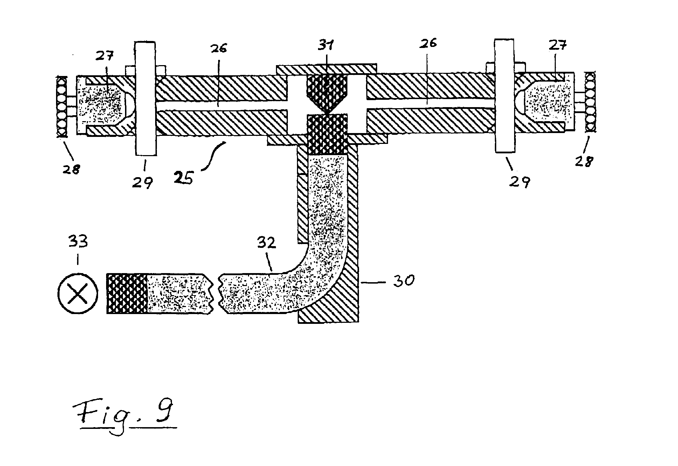

Fig. 9 eine schematische Darstellung eines Detektionssystems im Querschnitt.

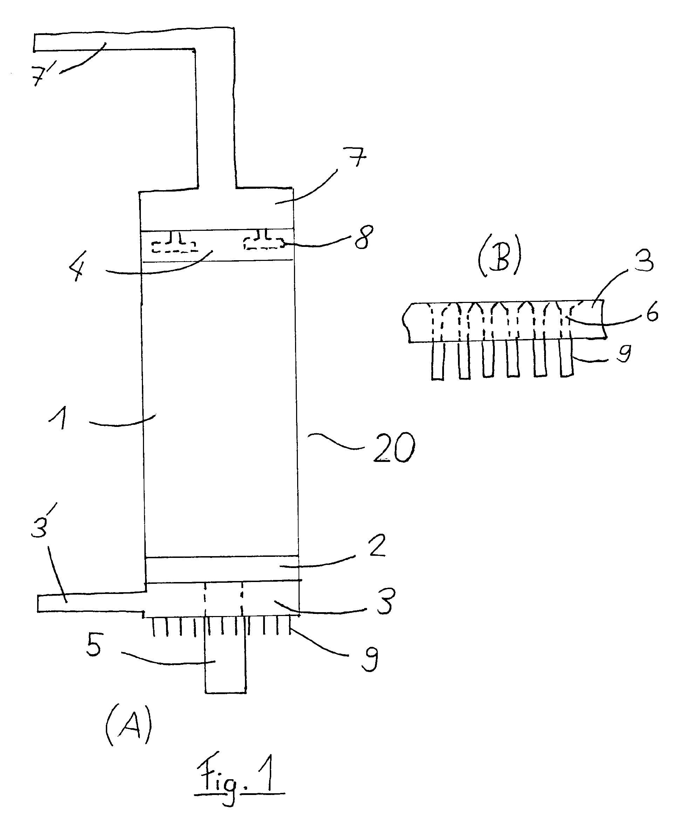

In Fig. 1A ist ein bekannter Annularchromatograph schematisch dargestellt. Dabei ist in eine Säule ein Teilchenbett 1 eingefüllt, das auf einer porösen oder mit (nicht dargestellten) vertikalen Bohrungen versehene Bodenplatte 2 aufsitzt und von einer Deckschicht 4 nach oben begrenzt wird. Säule mit Teilchenbett 1 sind von einem (nicht dargestellten) Motor über eine Antriebswelle 5 angetrieben um ihre Vertikalachse rotierbar gelagert. Die Zufuhr von Feed und Eluenten erfolgt dabei über einen feststehenden Aufgabekopf 7, der über einen Montageabschnitt 7' fix, d.h. nicht drehbar, montiert ist, wobei die Zufuhrkanäle 8 des Aufgabekopfs 7 vorzugsweise in die Deckschicht 4 eintauchen, um gleichmässige Aufgabe der Flüssigkeiten zu gewährleisten. Die Kanäle können die üblichen Ausgestaltungsformen, d.h. Einzel- Mehrfach- oder Schlitzdüsen oder dergleichen, aufweisen, für die Erfindung bevorzugt werden jedoch an den Säulenumfang angepasst gekrümmte Schlitzdüsen unterschiedlicher Breite, um die Feed- und Eluentenströme möglichst genau aufeinander abstimmen zu können.

Bei herkömmlichen Annularchromatographen sind an der Unterseite der Bodenplatte 2 Auslasskanäle bzw. -röhrchen 9 zur Sammlung der Eluate vorgesehen. Diese Auslässe 9 rotieren gemeinsam mit Säule und Teilchenbett 1 um deren vertikale Achse. In der W099/12625 wird allerdings, wie oben erwähnt, eine Ausführungsform eines Annularchromatographen beschrieben, bei der die Auslässe 9 relativ zur Antriebswelle 5 feststehen, d.h. nicht rotieren.

Eine solche Ausführungsform ist in Fig. 1A und Fig. 1B durch den Auffangring 3 angedeutet, auf dem die Bodenplatte 2 des Teilchenbetts 1 abdichtend gleitend geführt ist. Der Auffangring 3 ist über einen Montageabschnitt 3' feststehend, d.h. nicht drehbar, montiert und im Inneren in Kammern 6 unterteilt, die jeweils in einen Auslass 9 zum Auffangen von Eluat münden. Die Bodenplatte 2 wird vom Eluat entweder über Poren oder (nicht dargestellte) vertikale Bohrungen passiert, bevor es in die Kammern 6 und von dort zu den Auslässen 9 gelangt. Die Tatsache, dass die Kammern 6 und die Auslässe 9 nicht rotieren, stellt die Grundlage für die vorliegende Erfindung dar.
Auf diese Weise ist es nämlich möglich, in den Kammern 6 oder Auslässen 9 Sensoren bzw. Detektoren vorzusehen, ohne dass deren Anschlusskabeln (d.h. Netz- und Datenkabeln) durch den rotierenden Annularchromatographen um die Antriebswelle 5 "aufgewickelt" werden.

Die Detektoren bzw. Sensoren können dabei aus einer Reihe von Modellen mit diversesten Bauarten ausgewählt werden. Neben den üblicherweise eingesetzten optischen Detektoren wie Fluoreszensdetektoren, UV-Absorptionsdetektoren und Brechungsindexdifferenz-(RI)-Detektoren können auch indirekte optische Sensoren, Leitfähigkeitsdetektoren, aber auch dosimetrische Detektoren für radioaktive (ionisierende) Strahlung und Radiolumineszenzdetektoren verwendet werden. Erfindungsgemäss bevorzugt sind aufgrund der relativ niedrigen Kosten für Ausrüstung und Installation optische Sensoren/Detektoren. Besonders bevorzugt sind faseroptische Sensoren, insbesondere faseroptische Reflexions- oder Transmissions-Fluoreszenz- oder UV-Absorptions-Detektoren, da diese hohe Messgenauigkeit bei einfacher Installation aufgrund der geringen Grösse ihrer Sensorköpfe und rascher, fehlerfreier Datenübertragung verbinden.

Dabei werden als faseroptische Sensoren jedoch auch indirekte Sensoren, insbesondere die unter dem Namen Mikrooptoden bekannten, neuen faseroptischen Mikrosensoren bevorzugt, welche kontinuierliche Bestimmungen diverser Parameter von in Lösungen enthaltenen Stoffen, wie z.B. pH, pO₂, pCO₂, oder Temperaturmessungen ermöglichen.

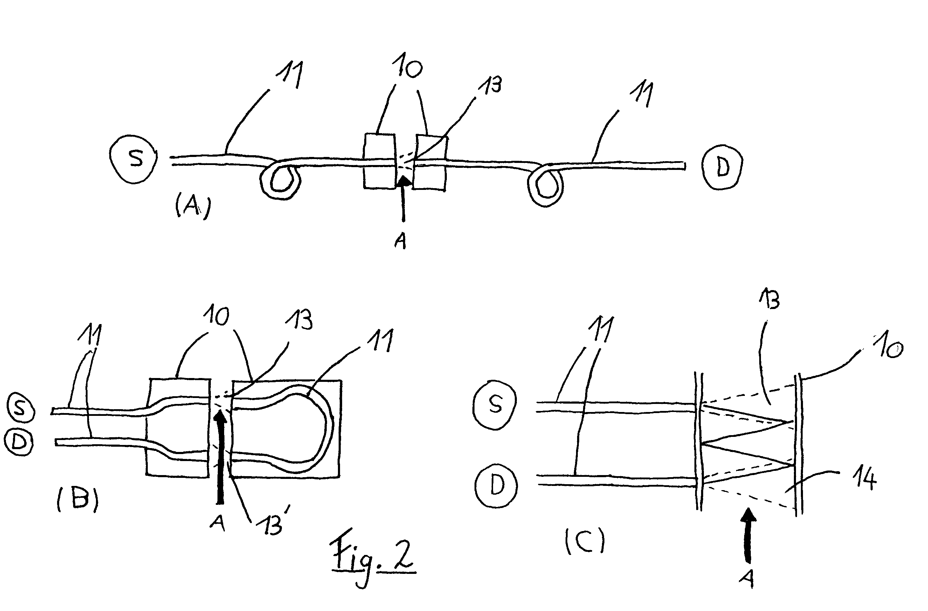

In den Figuren 2A bis 2C sind Ausführungsformen der erfindungsgemäss einsetzbaren Sensoren 10 nämlich faseroptische Transmissions-Durchflusssensoren dargestellt. Die Sensoren 10 sind dabei in den durch den Pfeil A angedeuteten Strömungsweg des Eluats im jeweiligen (in der Figur nicht dargestellten) Auslass 9 bzw. in die jeweilige Kammer 6 des Auffangringes 3 ein eingeschoben. Ausgehend von einer Lichtquelle 5 wird Anregungslicht (z.B. UV- oder Laserlicht) durch Lichtleiter, vorzugsweise Glas-(insbesondere Quarz-)faserkabeln 11 zum Sensor 10 gesandt, wo es das im Auslass bzw. in der Kammer strömende Eluat durchstrahlt und von diesem zum Teil absorbiert wird. Die strichlierten Linien markieren hier - wie auch in den Figuren 2B und 2C - den vom Lichtleiter emittierten Lichtkegel 13.

Wie in Fig. 2A gezeigt, verlässt das in seiner Intensität abgeschwächte Licht gegenüber der Eintrittsstelle das Eluat wieder, tritt erneut in einen Lichtleiter 11 ein und wird zum Photodetektor (D) geleitet. In Fig.2B ist eine Ausführungsform zu erkennen, bei der das Licht nach dem einmaligen Durchtritt durch das wiederum entlang Pfeil A strömende Eluat in einer Lichtleiterschleife 11' zurückgeführt und bei Lichtkegel 13' erneut durch das Eluat hindurch geschickt wird, um die Absorptionswirkung, d.h. Lichtabschwächung, zu verstärken.

In Fig.2C wird schliesslich eine Sensoranordnung gezeigt, wo der in Lichtkegel13 einfallende Lichtstrahl an den, vorzugsweise planaren, Wänden des Sensors 10 reflektiert wird und auf diese Weise das Eluat (Pfeil A) mehrmals vom Licht durchdrungen (in Fig.2C z.B. viermal). Die strichlierten Linien am Eingang des zum Photodetektor (D) führenden Lichtleiter bezeichnen in diesem Fall dessen "Sichtfeld" 14, d.h. jenen Kegel, aus dem Licht in den Leiter 11 eintreten kann. Derartige Anordnungen eignen sich insbesondere zur UV-Absorptionsmessung.

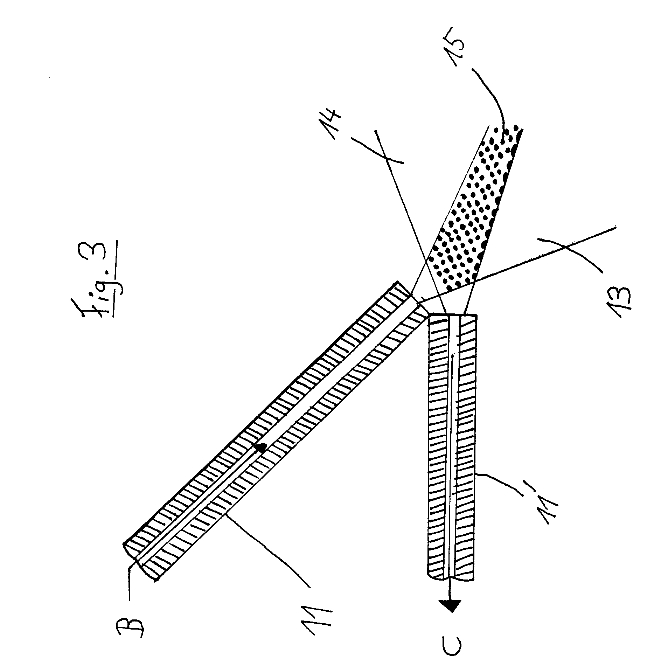

In Fig. 3 ist eine Reflexions-Sensor-Anordnung schematisch im Querschnitt dargestellt, die sich insbesondere zur Fluoreszenzmessung eignet. Durch Pfeil B dargestelltes Anregungslicht, vorzugsweise Laserlicht, wird über einen Lichtleiter, vorzugsweise wiederum ein Glasfaserkabeln 11, in das Eluat innerhalb eines/einer nicht dargestellten Auslasses/Kammer eingestrahlt und induziert Fluoreszenz des Eluats. Dieses Fluoreszenzlicht wird von einem weiteren, in einem bestimmten Winkel zum ersten ebenfalls in den betrachteten Auslass eingeführten Lichtleiter 11' aufgenommen und zu einem (nicht dargestellten) Photodetektor weitergeleitet. Der Schnittbereich 15 des ausgestrahlten Lichtkegels 13 und des vom abführenden Leiter aufnehmbaren Lichtkegels 14 ist punktiert dargestellt.

Mit einer derartigen Sensor-Anordnung muss in den Auslässen 9 des Annularchromatographen lediglich eine einzige Öffnung vorgesehen werden, in welche der Sensor 10 eingepasst werden kann, ohne den Strömungsdurchmesser des Eluats zu beschränken.

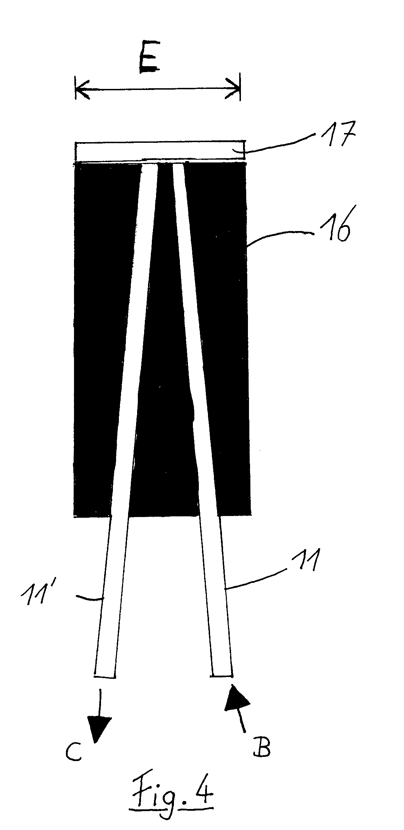

In material- und raumsparender Weise, sowie zum leichten Handling können die zu- und ableitenden Lichtleiterfasern 11, 11' zu einem einzigen Kabel zusammengefasst sein. Ein Sensorkopf 16 eines solchen 2-Faser-Sensors zur Fluoreszenzmessung ist in Fig.4 dargestellt. Die beiden Lichtleiter (Glas-bzw. Quarzglasfasern) 11, 11' stehen innerhalb des Sensorkopfs 16 wiederum in einem solchen Winkel zueinander, dass die Ausbeute an Fluoreszenzlicht maximiert ist. Vorzugsweise ist jeder Sensorkopf 16 zur Probe, d.h. zum Eluat, hin mit einem Quarzfenster 17 abgeschlossen, um die Fasern keinem direkten Kontakt mit dem Eluat auszusetzen. Der Durchmesser E des Sensorkopfs 16 hängt von der Stärke der Glasfasern ab und beträgt beim bevorzugten Faserdurchmesser von etwa 200 um etwa 2-3 mm. Die Pfeile B und C kennzeichnen erneut die einfallenden und aus dem Eluat austretenden Lichtstrahlen.

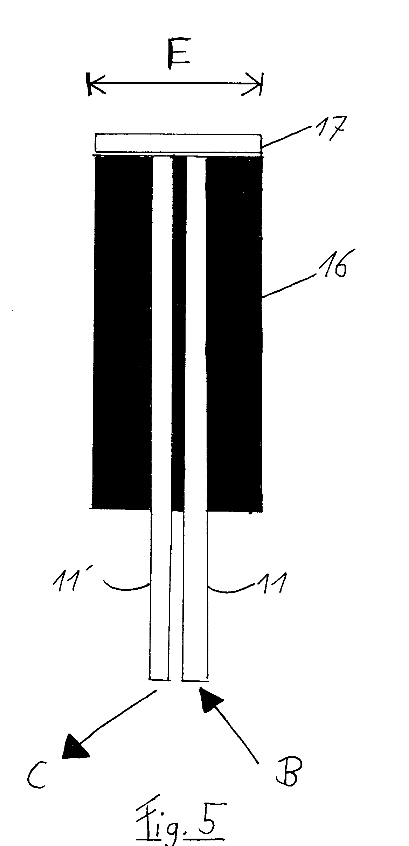

Fig.5 zeigt einen ähnlich wie in Fig. 4 aufgebauten Sensorkopf 16, der allerdings im wesentlichen parallele Glasfasern 11, 11' umfasst und vorzugsweise zu photometrischen, vorzugsweise Reflexions-UV-Absorptionsmessungen dient. Auch hier sind die Fasern 11, 11' wieder durch ein Quarzfenster 17 zum Eluat hin geschützt. Die Pfeile B und C haben die oben erwähnte Bedeutung.

Bei allen in den Figuren 2 bis 5 dargestellten Sensoren werden, wie bereits erwähnt, vorzugsweise Glasfasern, insbesondere Quarzglasfasern, eingesetzt, da sich dies durch extrem niedrige Dämpfungsraten bei der Informationsübertragung auszeichnen. Dabei beträgt die bevorzugte Faserstärke etwa 200 um, was etwa der oberen Grenze der Stärke für sogenannte Monomode-Fasern entspricht. Monomode-Fasern sind solche, in denen aufgrund des geringen Faserdurchmessers keine transversale Wellenleitung möglich ist. Andererseits ist jedoch die maximal leitbare Lichtmenge durch den Faserdurchmesser eingeschränkt, sodass stärkere Faserkerne wünschenswert wären. In bestimmten Fällen können im Rahmen der vorliegenden Erfindung auch derartige, sogenannte Multimode-Fasern, d.h. Fasern mit einem Durchmesser grösser 200 µm eingesetzt werden. Aufgrund der erhöhten Kosten für die Fasern und den erhöhten apparativen Aufwand zur Auflösung und Weiterverarbeitung von Multimode-Wellen werden allerdings üblicherweise Monomode-Fasern mit ihrem Maximaldurchmesser von etwa 200 µm verwendet.

Als Lichtquelle werden vorzugsweise Deuteriumlampen (preiswert, aber geringe Lichtdichte), Xenon-Blitzlampen und Xenon- oder auch andere Laser (allesamt hohe Lichtintensität, aber auch teuer) verwendet. Für die UV-Spektroskopie werden insbesondere Deuteriumlampen herangezogen.

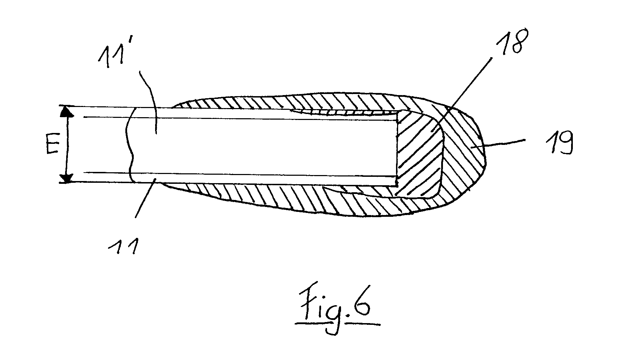

Fig. 6 zeigt schematisch einen indirekten optischen Sensor in Form eines faseroptischen Mikrosensors (Mikrooptode). Das Prinzip von Mikrooptoden beruht einerseits auf der umgebungsabhängigen Farbreaktion (Lichtabsorption) verschiedener Indikatoren (Chromophore)sowie andererseits auf der ebenfalls umgebungsabhängigen Lichterzeugung verschiedener Luminophore. Das heisst, dass an der Spitze eines Sensorkopfs eine Sensorschicht 18 vorgesehen ist, die ein Chromophor oder Luminophor enthalten, welche selbst entweder einen Indikator darstellen oder gemeinsam mit einem solchen vorliegen können ("Working Chemistry").

Die Sensorschicht 18 ist in beiden Fällen mit einem dünnen, d.h. wenige µm dünnen, semipermeablen Überzug 19 versehen, der Durchlässigkeit für bestimmte, im Eluat enthaltene, kleine Molekülsorten besitzt, z.B. H⁺, OH^{.}, O₂, CO₂, etc., für das übrige Eluat jedoch eine Sperrschicht darstellt. Weiter steht die Sensorschicht 18 mit zu- und ableitenden Glasfaserkabeln 11, 11' in Kontakt, die in diesem Fall besonders dünn, d.h. im Bereich von wenigen Dutzend µm bis zu 100 µm, und gegebenenfalls (wie in Fig.6 dargestellt) koaxial ausgebildet sein können. Der Gesamtdurchmesser E der beiden Koaxialfasern beträgt im vorliegenden Falle etwa 125 µm.

Ein geringer Teil des - wie bei den Sensoren der Figuren 3 bis 5 am Sensor vorbeiströmenden - Eluats diffundiert durch den Überzug 19 hindurch und reagiert mit zumindest einem Teil der Sensorschicht 18. In Abhängigkeit von der zu messenden Korngrösse, wie z.B. pH, pO₂, etc., ändert sich die Lichtabsorption der Sensorschicht 18, und somit in einem Fall deren "Farbe", was durch Totalreflexion beim Bestrahlen mit Anregungslicht (z.B. UV-Licht) festgestellt wird und in einen Konzentrationswert des Eluats umgewandelt werden kann. Im Fall von Luminophoren ändert sich die Menge des vom Luminophor nach der Anregung ausgesandten Lichts, z.B. aufgrund von unterschiedlich hohem Energietransfer vom Luminophor zu einem gemeinsam damit in der Sensorschicht 18 vorliegenden Indikator nach dessen Reaktion mit dem Eluat.

Falls derartige Mikrooptoden-Sensoren z.B. zur Temperaturmessung (anhand von temperaturabhängiger Absorption durch Chromo- und Luminophor) herangezogen werden sollen, braucht der Überzug keinerlei Durchlässigkeit für das Eluat aufzuweisen, und die Messungen erfolgen wie bei den vorhergehenden Sensoren im Zuge des Vorbeiströmens des Eluats am Sensor.

Mittels derartiger Mikrooptoden lassen sich somit kontinuierlich und nahezu ohne Störungen des Eluatstroms in den Kammern/Auslässen des Annularchromatographen Konzentrationsbestimmungen von im Eluat gelösten Stoffen durchführen, aber auch Kenngrössen wie die Temperatur des Eluats bestimmen.

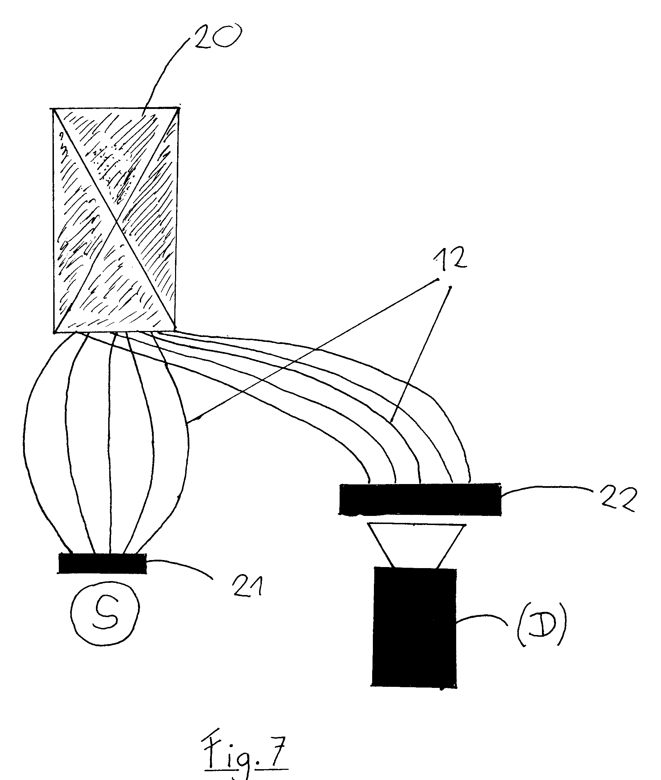

In Fig.7 ist schematisch die Sensor-Anordnung eines erfindungsgemässen Annularchromatographen dargestellt. Ausgehend von einer Lichtquelle S wird Anregungslicht über einen optischen Filter 21. z.B. Interferenzfilter, Monochromator, Polarisator, etc., und Glasfaserbündeln 12 zum eigentlichen Annularchromatographen 20, genauer gesagt zu dessen (nicht dargestellten) Auslässen, geleitet. Das Licht mit geänderter Intensität (aufgrund verschiedener Eigenschaften des Eluats in diesen Auslässen) wird wiederum über Glasfaserbündel 12 und einen weiteren optischen Filter einem abbildenden Photodetektor D zu geführt.

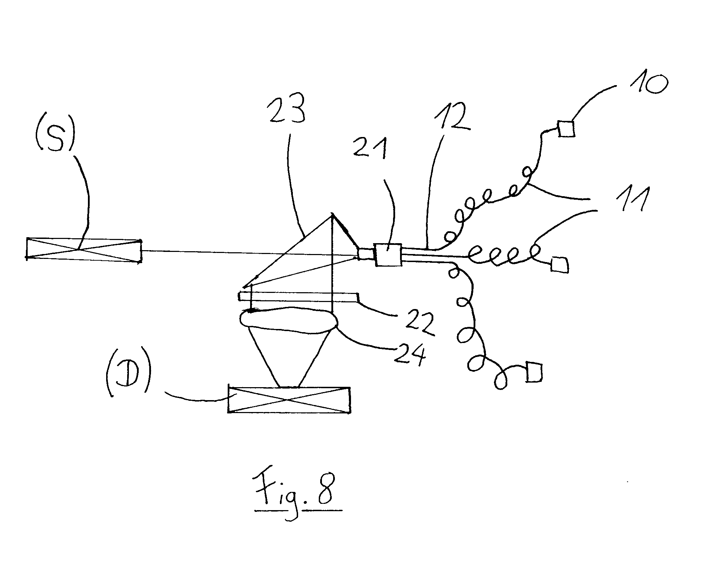

In Fig.8 ist dies Übertragung der Lichtsignale zu und von den Sensoren 10 ebenfalls schematisch unter Einbeziehung eines optischen Kopplers/Entkopplers ("Optokoppler") 23 dargestellt. Das Licht gelangt wiederum von einer Lichtquelle S über einen optischen Filter 21 und Glasfaserbündel 12 zu den Sensoren 10, über dieselben Glasfaserbündel 12 wieder zurück zum Optokoppler 23, wo die einzelnen Signale aufgesplittet und so in verarbeitbare Form für den Detektor D gebracht werden. Über den optischen Filter 22 und die Linse 24 gelangen diese Signale schliesslich zum abbildenden Detektor D, wo simultan Informationen aus sämtlichen Messkanälen verarbeitet werden können.

Der abbildende Detektor D wird vorzugsweise ausgewählt aus herkömmlichen Diodenarrays oder -zellen (wobei jeder Photodiode ein kleiner Teil des empfangenen Lichtspektrums zugeordnet wird; niedrige Kosten aber auch begrenzte Messgenauigkeit), CCD-Detektoren ("charge coupled device"; mässige Empfindlichkeit aber niedrige Kosten; ist für einzelne Messverfahren optimierbar) sowie Mikrokanalplatten, die sich durch ausgezeichnete Messempfindlichkeit auszeichnen, allerdings auch sehr hohe Anschaffungskosten inkludieren.

Der Detektor D ist mit einem nicht dargestellten Computer gekoppelt, der die Daten der einzelnen Kanäle (pro Auslass jeweils ein Kanal, d.h. beispielsweise insgesamt 180 Kanäle) zu jedem Zeitpunkt sequenziell abfragen kann. Es wird vorzugsweise Software eingesetzt, mittels derer die Daten der einzelnen Auslässe in kurzen Zeitintervallen (ms Bereich) sequenziell abgefragt und bearbeitet werden können, was den Erhalt von Informationen über die Beschaffenheit des Eluats in räumlich geordneter sowie stets aktueller Form ermöglicht.

Die Sensoren 10 selbst und deren Anschlusskabel 11 können frei liegen oder aber z.B. durch Vorsehen einer (nicht dargestellten) Schutzabdeckung in der Art eines "doppelten Bodens" an der Unterseite der Säule 1, die Ausnehmungen für die Auslässe 9 aufweist, geschützt angeordnet sein.

Eine mögliche Variante eines erfindungsgemässen Detektionssystems umfasst einen Messzellengrundkörper 25 mit radial von innen nach aussen verlaufenden Bohrungen für die optischen Kanäle 26, welcher an seinem Aussenrand sechzehn UV-Photodetektoren 27 trägt, deren Anschlüsse über ein Flachbandkabel 28 elektrisch zugänglich sind. Senkrecht zu den optischen Kanälen 26 befinden sich im Messzellengrundkörper 25 Bohrungen, in die Quarzkapillaren 29 als Messzellen eingeschoben werden können. Der Messzellengrundkörper kann auf eine Messhalterung 30 aufgesetzt werden, in deren Mitte eine Kegeloptik 31 das über ein Lichtleitkabel 32 von einer Xe-Hochdrucklampe 33 gelieferte und mittels eines Interferenzfilters in einem Filterhalter spektral gefilterte Messlicht in Form eines Lichtbandes mit horizontaler Rundstrahlcharakteristik abstrahlt. Der Anschluss des Lichtleitkabels an den Filterhalter erfolgt mittels auswechselbarer Adapter. Kegeloptik und Lichtleitkabel sind in einem in die Messhalterung einschraubbaren Faserhalter eingeklebt. Der Wechsel zwischen verschiedenen Faseroptiken in der Messzelle ist so durch einfaches Austauschen der einschraubbaren, vorjustierten Baugruppe ohne zusätzliche Justierarbeiten möglich. Die Anschlüsse der Photodetektoren sind vor dem Zusammenbau der Hauptbaugruppen des Detektors mit schwarzem Isolierband abgedeckt. In der messfertig zusammengebauten Anordnung wird ein "industrial grade" Lichtleitfaserbündel zur Führung des Lichtes von der Lichtquelle zur Rundstrahloptik verwendet. Diese kann vorzugsweise wegen der geringeren Übertragungsverluste auch durch eine Flüssigkern-Lichtleitfaser ersetzt werden. Obwohl der Umgebungslichteinfluss durch den in den Photodetektor integrierten UV-Filter und die Blendenwirkung der optischen Kanäle minimal ist, kann die innere Öffnung des Messzellengrundkörpers mit einer Abdeckung lichtdicht verschlossen werden. Ein Digitalvoltmeter kann zur Messung der Ausgangsspannung der einzelnen Photodetektoren verwendet werden, welche über eine Switchbox manuell nacheinander auf den Multimetereingang geschaltet werden können. Für die Justierung der Lichtleitkabel und der Kegeloptiken in der Messhalterung sowie für erste Messungen mit Testlösungen wurde an Stelle des Multimeters ein PC, ausgerüstet mit einer 8-Kanal-PCMCIA-AD-Wandlerkarte und einem echtzeitfähigen Messprogramm eingesetzt.

Zusammenfassend ist festzuhalten, dass mittels vorliegender Erfindung die kontinuierliche Überwachung des Eluats aus annularchromatographischen Trennungen sowie der Trennleistung des Annularchromatographen, ermöglicht wird, was nach dem Stand der Technik nicht möglich war.

Es wird ausserdem darauf hingewiesen, dass hierin nur die bevorzugten Ausführungsformen der Erfindung beschrieben wurden, Fachleute auf dem Gebiet jedoch zahlreiche Variationen und Änderungen daran vornehmen können, die ebenfalls in den Schutzbereich der vorliegenden Erfindung fallen.

## Patentansprüche

1. Annularchromatograph (20), umfassend ein mittels einer Antriebswelle (5) um seine Vertikalachse rotierbares, zylindermantelförmiges, zwischen zwei konzentrischen Zylindern und auf einer Bodenplatte angeordnetes und gegebenenfalls mit einer Deckschicht (4) ausgestattetes Teilchenbett (1), einen feststehenden Aufgabekopf (7) mit Zufuhrkanälen (8) für Feed und Eluens, sowie Auslässe (9) am unteren Ende des Teilchenbetts (1) zum Auffangen des Eluats, wobei die Auslässe (9) in Form von mit Flüssigkeitsableitungen versehenen Kammern (6) eines feststehenden Auffangringes (3) ausgebildet sind, auf dem die Bodenplatte (2) des Teilchenbetts (1) abdichtend gleitend geführt wird, dadurch gekennzeichnet, dass zum Anzeigen des Austritts von Eluat aus dem Teilchenbett (1) bzw. der Bodenplatte (2) und/oder zum Feststellen von Eluateigenschaften in den Auslässen (9) oder den Kammern (6) des Auffangringes (3) Sensoren bzw. Detektoren (10) angeordnet sind.

2. Annularchromatograph nach Anspruch 1, dadurch gekennzeichnet, dass pro Auslass (9) oder Kammer (6) zumindest ein Sensor bzw. Detektor (10) angeordnet ist.

3. Annularchromatograph nach Anspruch 1 oder 2, dadurch gekennzeichnet, dass die Sensoren bzw. Detektoren (10) aus optischen Detektoren, vorzugsweise Fluoreszenzdetektoren, UV-Absorptionsdetektoren, und Brechungsindexdifferenz-(RI)-Detektoren, indirekten optischen Sensoren, Leitfähigkeitsdetektoren, dosimetrischen Detektoren für radioaktive (ionisierende) Strahlung und Radiolumineszenzdetektoren ausgewählt sind.

4. Annularchromatograph nach Anspruch 3, dadurch gekennzeichnet, dass die Detektoren (10) faseroptische Sensoren sind.

5. Annularchromatograph nach Anspruch 4, dadurch gekennzeichnet, dass die faseroptischen Sensoren (10) aus der Gruppe der faseroptischen Reflexions- oder Transmissions-Fluoreszenzdetektoren, faseroptischen Reflexions- oder Transmissions-UV-Absorptionsdetektoren, und indirekten optischen Sensoren, insbesondere faseroptischen Mikrosensoren (Mikrooptoden) ausgewählt sind.

6. Annularchromatograph nach Anspruch 5, dadurch gekennzeichnet, dass die Mikrooptoden Konzentrationssensoren für im Eluat gelöste Stoffe, vorzugsweise pH-, pO₂- oder pCO₂-Sensoren sind.

7. Annularchromatograph nach Anspruch 5 oder 6, dadurch gekennzeichnet, dass die Mikrooptoden an der Spitze eines Sensorkopfs eine Sensorschicht (18) enthalten, welche vorzugsweise mit einer semipermeablen, für kleine Moleküle wie H⁺, OH⁻, O₂, CO₂ durchlässigen, für das Eluat jedoch undurchlässigen Membran (19) überzogen ist.

8. Annularchromatograph nach einem der vorhergehenden Ansprüche, dadurch gekennzeichnet, dass die Sensoren (10) über anleitende Lichtleiter, insbesondere Glasfaserkabel (11), mit einer - vorzugsweise externen - Lichtquelle (S) verbunden sind und zwecks Signal- bzw. Datenübertragung über ableitende Lichtleiter, insbesondere Glasfaserkabel (11'), mit einem abbildenden Photodetektor (D) in Kontakt stehen, wobei die Glasfaserkabeln (11 bzw. 11') gegebenenfalls zu Lichtleiterbündeln (12) zusammengefasst sind.

9. Annularchromatograph nach Anspruch 8, dadurch gekennzeichnet, dass die Lichtquelle (S) aus Xenon-Blitzlampen, Deuteriumlampen und Lasern ausgewählt ist.

10. Annularchromatograph nach Anspruch 8 oder 9, dadurch gekennzeichnet, dass der abbildende Photodetektor (D) eine das optische Signal in ein elektrisches Signal umwandelnde Diodenzelle, ein CCD-Chip oder eine Mikrokanalplatte ist.

11. Annularchromatograph nach einem der Ansprüche 8 bis 10, dadurch gekennzeichnet, dass die Glasfaserkabeln (11, 11') innerhalb des Annularchromatographen (20) von der Lichtquelle (S) zu den Sensoren (10) und zum abbildenden Photodetektor (D), gegebenenfalls unter Einbeziehung eines Optokopplers (23), eines optischen Filters (21) für angeleitetes Licht, eines optischen Filters (22) für abgeleitetes Licht und/oder einer Linse (24), geführt sind.

12. Annularchromatograph nach einem der Ansprüche 8 bis 11, dadurch gekennzeichnet, dass die Glasfaserkabeln (11, 11') Quarzfaserkabeln, vorzugsweise mit einem Durchmesser von etwa 200 µm sind.

13. Annularchromatograph nach einem der Ansprüche 9 bis 12, dadurch gekennzeichnet, dass ein, vorzugsweise jeder, Sensor (10) im Bereich eines Sensorkopfes (16) mittels eines Quarzfensters (17), vorzugsweise über den gesamten Durchmesser (E) des Sensorkopfes (16), gegenüber dem Eluat i abgeschlossen ist.

14. Annularchromatograph nach einem der Ansprüche 8 bis 13, dadurch gekennzeichnet, dass in einem Sensorkopf (16) eines Sensors (10) ein eintretender Lichtleiter (11) und ein austretender Lichtleiter (11') parallel oder in einem Winkel zueinander angeordnet sind.

15. Annularchromatograph nach einem der Ansprüche 8 bis 14, dadurch gekennzeichnet, dass der abbildende Photodetektor (D) mit einem Computer verbunden ist und vorzugsweise die von den Sensoren (10) erhaltenen Daten im Computer mittels Software sequenziell abfragbar sind.

16. Annularchromatograph nach Anspruch 15, dadurch gekennzeichnet, dass er mit einem Prozessrechner und/oder einer Prozesssteuerungseinheit für den Herstellungsprozess des mittels der Annularchromatographie zu trennenden Feed-Materials verbunden ist.

17. Verfahren zur Detektion des Austritts von Flüssigkeit aus einem Teilchenbett (1) oder einer Bodenplatte (2) eines gemäss einem der Ansprüche 1 bis 16 definierten Annularchromatographen (20) und/oder zur Bestimmung von Eigenschaften der austretenden Flüssigkeit, insbesondere eines Eluats, dadurch gekennzeichnet, dass von einer - vorzugsweise externen - Lichtquelle (S) über Lichtleiterkabeln (11) eine Lichtübertragung, insbesondere in Form eines Lichtkegels (13, 13') zu den Sensoren (10) hin und von den Sensoren (10) weg eine Signal- bzw. Datenübertragung, insbesondere ausgehend von einem Lichtkegels (14), über Lichtleiterkabeln (11') hin zu einem abbildenden Photodetektor (D) erfolgt.

18. Verfahren nach Anspruch 17, dadurch gekennzeichnet, dass durch den Photodetektor (D) erhaltene Signale ausgewertet und, vorzugsweise mittels Computerunterstützung, zur kontinuierlichen Überwachung der Trennleistung des Annularchromatographen (20) und/oder eines Verfahrens zur Herstellung oder Bearbeitung des aufzutrennenden Feed-Materials eingesetzt werden.
